# FASCICULE DE BREVET EUROPEEN

(11) **EP 0 591 028 B1**
(45) Date de publication et mention de la délivrance du brevet: **08.05.1996**
(21) Numéro de dépôt: 93402284.9
(22) Date de dépôt: 20.09.1993
(51) Int. Cl.: B62D 33/02

(54) **Dispositif d'articulation par le bas d'une ridelle de benne de véhicule**
Unteres Bordwandscharnier für Fahrzeugladepritschen
Hinge device for drop-down sideboards of loading platforms for vehicles

(30) Priorité: 29.09.1992 FR 9211595
(43) Date de publication de la demande: 06.04.1994
(73) Titulaire: MARREL, F-42160 Andrézieux-Bouthéon (FR)
(72) Inventeur: Grail, Joseph, F-42100 Saint Etienne (FR); Fanget, Paul, F-42100 Saint Etienne (FR)
(74) Mandataire: Rinuy, Santarelli

(56) Documents cités:
- DE-B- 1 007 188
- FR-A- 1 277 838

## Description

L'invention a trait aux ridelles de bennes de véhicules qui sont articulées par le bas.

On sait que les ridelles sont des portes qui forment une partie de la paroi verticale de la benne quand elles sont fermées et qu'on ouvre pour faciliter le chargement ou le déchargement de la benne. Lorsqu'une ridelle est articulée par le bas, elle tend à s'ouvrir spontanément sous l'effet de son poids entre sa position fermée où elle est à peu près verticale au-dessus du fond de la benne, et une position de bout de course ouverte où elle est par exemple à peu près verticale au-dessous du fond de la benne.

L'invention a plus particulièrement trait à un dispositif d'articulation par le bas d'une ridelle qui permette à celle-ci d'avoir deux positions de bout de course ouvertes, une position partiellement ouverte où la ridelle est par exemple à l'horizontale, et une position pleinement ouverte où la ridelle est par exemple à la verticale. Un dispositif de ce type est décrit dans FR-A-1 277 838. L'invention vise à Fournir un tel dispositif qui soit à la fois simple, commode, fiable et économique.

L'invention propose à cet effet un dispositif d'articulation par le bas d'une ridelle de benne de véhicule, comportant plusieurs charnières dont au moins une est formée par un premier élément solidarisé à une paroi latérale inférieure de la benne, par un deuxième élément solidarisé à la ridelle, et par un axe d'articulation entre le premier et le deuxième éléments ; dispositif qui comporte des moyens pour maintenir de façon amovible à proximité dudit axe d'articulation un doigt dans une position d'arrêt ; ledit deuxième élément comportant un moyen de butée, qui quand le doigt est maintenu dans ladite position d'arrêt, interdit à la ridelle lorsqu'elle s'ouvre d'aller au-delà d'une position partiellement ouverte prédéterminée où le moyen de butée prend appui sur le doigt, et qui quand le doigt est escamoté, n'interfère pas sur l'ouverture de la ridelle ; ledit doigt ayant, dans ladite position d'arrêt, une première zone allongée de contact par laquelle il porte contre une paroi solidaire de la benne, ledit moyen de butée prenant appui sur ledit doigt dans ladite position partiellement ouverte prédéterminée, par une deuxième zone allongée de contact, de sorte que le doigt maintient la ridelle dans ladite position partiellement ouverte prédéterminée en étant comprimée entre lesdites première et deuxième zones allongées de contact.

Lorsque le doigt est dans la position d'arrêt, la ridelle est en position de bout de course ouverte lorsque le moyen de butée prend appui sur le doigt, la ridelle se maintenant dans cette position sous l'effet de son poids.

On voit que les moyens prévus pour obtenir la position partiellement ouverte prédéterminée de la ridelle sont particulièrement simples, commodes et économiques.

Sur le plan de la fiabilité, on notera qu'il est particulièrement avantageux que ce soit en étant sollicité à la compression que le doigt supporte les efforts de maintien de la ridelle dans la position partiellement ouverte prédéterminée, et non en étant sollicité par exemple au cisaillement comme cela aurait été le cas s'il ne portait pas sur la paroi solidaire de la benne par la première zone allongée de contact. On évite en effet ainsi que le doigt ne se déforme, ce qui aurait ensuite gêné son passage de la position d'arrêt à la position escamotée.

Selon des caractéristiques préférées, ledit doigt est cylindrique avec lesdites première et deuxième zones allongées de contact faisant partie de sa paroi latérale, ladite paroi solidaire de la benne présentant une rainure de courbure correspondante sur laquelle porte ladite première zone allongée de contact dans ladite position d'arrêt, ledit moyen de butée présentant une surface ayant une courbure correspondante par laquelle il prend appui sur ladite deuxième zone allongée de contact dans ladite position partiellement ouverte prédéterminée.

Le caractère cylindrique du doigt permet de mettre en oeuvre de façon particulièrement simple les moyens pour maintenir de façon amovible le doigt (un simple trou suffit), le fait que la paroi solidaire de la benne et que la surface du moyen de butée présentent une courbure correspondante, permettant au doigt de porter par une surface (et non par une ligne), ce qui réduit encore les risques de déformation du doigt.

Selon des caractéristiques de réalisation préférées pour leur simplicité :
- ledit premier élément est une chape et ledit deuxième élément un tenon qui vient entre deux ailes de la chape qui sont mutuellement parallèles et font saillie à partir d'une paroi de fond de la chape, ledit axe d'articulation étant orienté parallèlement à la paroi de fond et transversalement auxdites ailes qui le porte, ladite paroi solidaire de la benne sur laquelle porte la première zone allongée de contact du doigt étant ladite paroi de fond, lesdits moyens que comporte la chape pour maintenir de façon amovible le doigt, comportant un trou transversal dans au moins une dite aile, trou à travers lequel le doigt est adapté à coulisser parallèlement à lui-même pour venir dans ladite position d'arrêt, et pour être escamoté,
- ledit moyen de butée du tenon est un mentonnet.

Selon d'autres caractéristiques préférées, le dispositif comporte au moins deux charnières similaires comportant une dite chape et un dit tenon, et en outre une tige munie pour chaque charnière d'un dit doigt, chaque doigt venant dans ladite position d'arrêt ou s'escamotant quand la tige est déplacée parallèlement à elle-même respectivement dans un sens ou dans l'autre.

On répartit ainsi sur plusieurs doigts les efforts de maintien en position partiellement ouverte de la ridelle, sans pour autant multiplier le nombre de manoeuvres nécessaires par le nombre de charnières puisque grâce à la tige on réalise dans la même manoeuvre le passage de tous les doigts de la position escamotée à la position d'arrêt ou vice-versa.

De préférence chaque dite chape comporte au moins un talon derrière lequel prend appui ladite tige, de sorte que l'ensemble tige-doigts se maintient aux chapes avec chaque doigt engagé dans un dit trou d'une aile et ladite tige en appui sur lesdits talon, tant en position d'arrêt qu'en position escamotée.

Le fait que l'ensemble tige-doigts se maintient aux chapes est avantageux car il permet de disposer du dispositif d'articulation selon l'invention en modifiant essentiellement les charnières, et non la benne proprement dite. Il est en outre particulièrement commode et économique de mettre en oeuvre ce maintien par un simple talon prévu sur les chapes.

Selon d'autres caractéristiques préférées :
- ladite tige est munie d'une poignée pour sa manipulation,
- il comporte des moyens pour maintenir en position ladite tige,
- lesdits moyens pour maintenir en position la tige comportent une première et une deuxième griffes élastiques dans chacune desquelles est adaptée à s'engager une poignée dont est munie la tige, chaque doigt étant en position d'arrêt quand la poignée est engagée dans la première griffe, et en position escamotée quand la poignée est engagée dans la deuxième griffe.

L'exposé de l'invention sera maintenant poursuivi par la description d'un exemple de réalisation, donnée ci-après à titre illustratif et non limitatif, en référence aux dessins annexés sur lesquels :
- la figure 1 est une vue en élévation d'un camion muni d'une benne dont les ridelles sont articulées par le bas ;
- la figure 2 montre en agrandissement la portion de la benne située autour de la ridelle qui est à gauche sur la figure 1, cette ridelle étant munie d'un dispositif d'articulation conforme à l'invention avec trois charnières telles qu'exposées précédemment, qui sont illustrées avec le doigt en position d'arrêt ;
- la figure 3 montre la tige qui porte les doigts respectifs de ces charnières ;
- la figure 4 montre une variante de cette tige, où la poignée de manipulation est située à un emplacement différent ;
- la figure 5 est un agrandissement de l'une des charnières, avec le doigt en position d'arrêt ;
- la figure 6 est la coupe repérée VI-VI sur la figure 5 ;
- la figure 7 est une vue similaire à la figure 6, mais avec la ridelle en position de bout de course partiellement ouverte prédéterminée ;
- la figure 8 est une vue similaire à la figure 5, mais avec le doigt en position escamotée ; et
- la figure 9 est une vue similaire à la figure 7, mais avec la ridelle en position de bout de course pleinement ouverte.

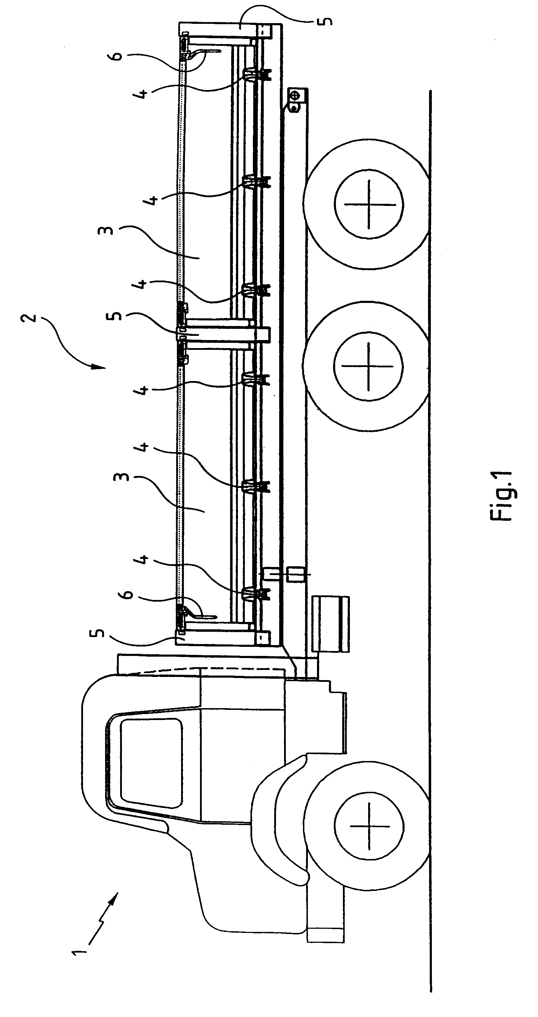

Le camion 1 montré sur la figure 1 comporte une benne 2 avec de chaque côté deux ridelles 3 articulées par le bas grâce à trois charnières 4 qui font partie d'un dispositif d'articulation conforme à l'invention, chaque ridelle 3 étant disposée entre deux poteaux 5 au sommet desquels elle est accrochée en position fermée grâce à un dispositif de verrouillage comportant une poignée de manoeuvre 6 : lorsqu'on tire sur celle-ci pour la soulever, la ridelle 3 se décroche de chaque côté du poteau 5, et va s'ouvrir jusqu'en bout de course en pivotant autour de l'axe géométrique commun aux axes d'articulation des charnières 4.

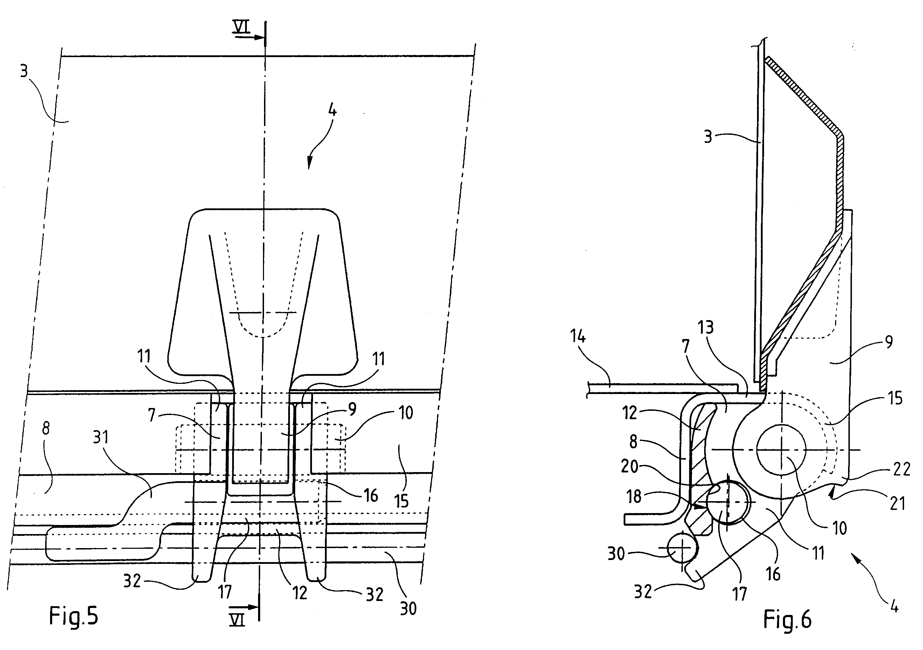

Chacune de celles-ci (voir notamment figures 5 et 6) est formée par une chape 7 solidarisée à une paroi latérale 8 inférieure de la benne, par un tenon 9 solidarisé à la ridelle 3, et par un axe d'articulation 10 entre la chape 7 et le tenon 9. Ce dernier vient entre deux ailes 11 de la chape qui sont mutuellement parallèles et font saillie à partir d'une paroi de fond 12 de la chape 7, l'axe d'articulation 10 étant orienté parallèlement à la paroi 12 et transversalement aux ailes 11 par lesquelles il est porté.

La paroi latérale inférieure 8 de la benne sur laquelle est solidarisée la chape 7 fait partie d'un profilé qui se coude à angle droit au-dessus de la paroi 8 pour se continuer par une portion horizontale 13 qui est soudée sur une tôle de fond 14 de la benne, la portion 13 se poursuivant vers l'extérieur par une portion incurvée 15 qui entoure partiellement la partie supérieure de la chape 7, une ouverture étant ménagée dans la portion 15 pour le tenon de chaque charnière.

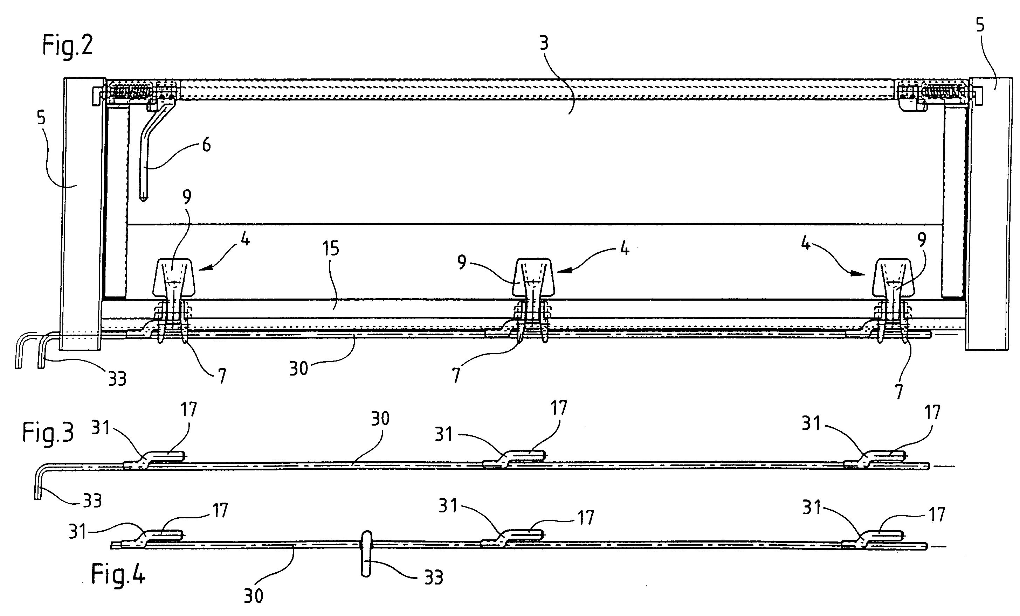

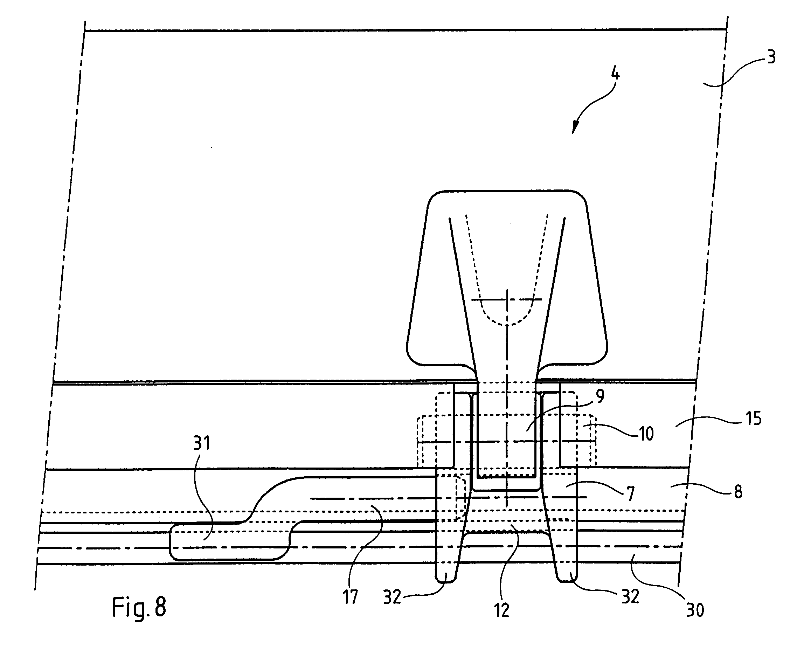

Chaque aile 11 présente un trou transversal 16 pour maintenir un doigt 17 dans une position dite d'arrêt, montrée sur les figures 2 et 5 à 7, le doigt 17 admettant une position escamotée montrée sur les figures 8 et 9.

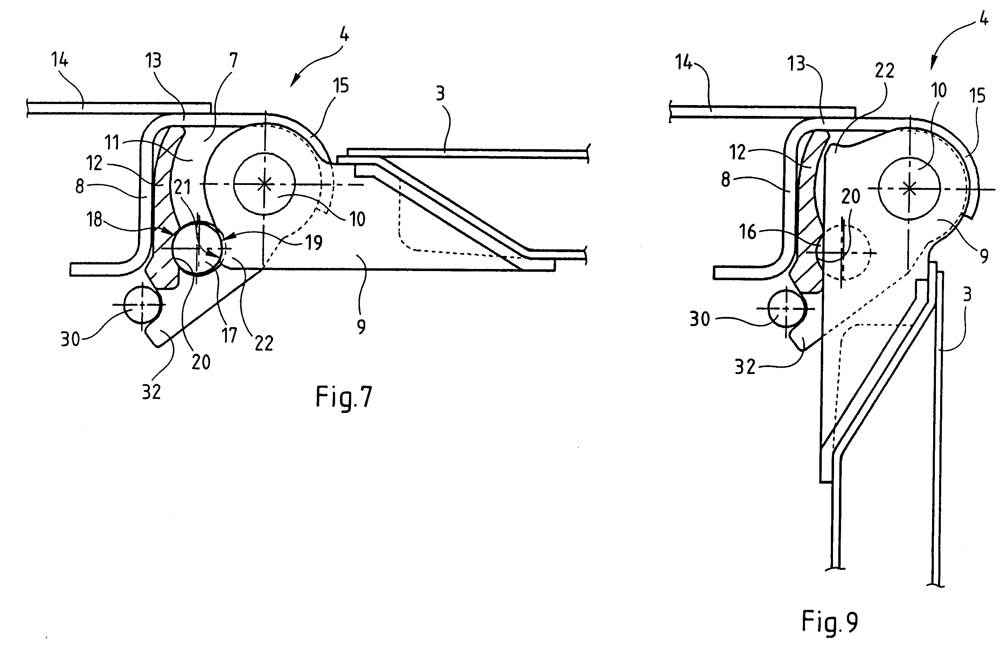

Dans la position d'arrêt, le doigt 17 est disposé à proximité et parallèlement à l'axe d'articulation 10, et sa partie se trouvant entre les ailes 11 est dans le trajet d'un mentonnet 22 que comporte le tenon 9. Par conséquent, quand on ouvre la ridelle 3 à partir de sa position fermée avec les doigts 17 chacun dans la position d'arrêt (figures 2, 5 et 6), la ridelle 3 va pivoter autour de l'axe d'articulation 10 jusqu'à ce que le mentonnet 22 prenne appui sur le doigt 17, interdisant à la ridelle d'aller au-delà de la position partiellement ouverte montrée sur la figure 7, où la ridelle 3 est à l'horizontale.

Pour passer de la position d'arrêt à la position escamotée, on fait coulisser le doigt 17 parallèlement à lui-même à travers l'un des trous 16, jusqu'à ce qu'il n'ait plus aucune partie entre les ailes 11 (voir figure 8), c'est-à-dire dans le trajet du mentonnet 22, qui est alors totalement libre. Par conséquent, si l'on ouvre la ridelle 3 avec chacun des doigts 17 en position escamotée, la ridelle va pouvoir basculer sans rencontrer d'obstacle au niveau des charnières 4, et elle va aller jusqu'à une position de course pleinement ouverte, montrée sur la figure 9, qui est ici verticale.

En fonction des circonstances, l'utilisateur va positionner comme il le faut les doigts 17 pour que selon son choix, les ridelles qu'il manoeuvre s'ouvrent jusqu'à la position de bout de course partiellement ouverte (figure 7) ou la position de bout de course pleinement ouverte (figure 9). S'il doit, par exemple, charger dans la benne des palettes au moyen d'un chariot à fourche, il va choisir la position pleinement ouverte montrée sur la figure 9, alors que s'il doit faire basculer la benne de côté pour déverser des matériaux en vrac, il choisira la position partiellement ouverte montrée sur la figure 7.

On observera que dans la position d'arrêt, le doigt 17 est maintenu par les ailes 11 sans qu'un intervalle le sépare de la paroi de fond 12, mais qu'au contraire il porte sur toute la longueur de celle-ci par une zone allongée de contact 18 (voir figures 6 et 7). De même, dans la position partiellement ouverte (figure 7), le mentonnet 22 prend appui par toute sa longueur sur le doigt 17, par une deuxième zone allongée de contact 19, opposée à la zone 18. Ainsi, lorsque le doigt 17 maintient la ridelle 3 dans la position partiellement ouverte, il travaille en étant comprimé entre les zones allongées 18 et 19, c'est-à-dire que les contraintes sont réparties le long du doigt 17, ce qui minimise les risques de déformation de celui-ci. A titre de comparaison, on observera que si le doigt 17 était maintenu par les trous 11 à distance de la paroi de fond 12, il travaillerait au cisaillement et aurait de grandes chances d'être déformé entre les trous 16, une telle déformation étant particulièrement gênante puisqu'elle empêcherait le doigt 17 d'être ramené dans la position escamotée.

Le doigt 17 est cylindrique, et les zones allongées de contact 18 et 19 font partie de sa paroi latérale. La paroi de fond 12 présente une rainure 20 ayant une courbure correspondant à celle de la paroi latérale du doigt 17, rainure sur laquelle porte la zone 18 dans la position d'arrêt ; et le mentonnet 22 présente une surface 21 ayant également une courbure correspondante, surface 27 par laquelle il prend appui sur la zone 19 dans la position partiellement ouverte (figure 7). On réduit encore ainsi les risques de déformation du doigt 17, puisque de cette façon les zones de contact 18 et 19 sont de véritables surfaces, et non de simples lignes.

Pour que l'utilisateur puisse faire passer simultanément tous les doigts 17 de la position d'arrêt à la position escamotée et vice-versa, les doigts 17 sont tous reliés à une tige 30, parallèle aux doigts 17, ceux-ci étant prolongés par une portion 31 en forme de S qui sert à les raccorder à la tige 30. Ainsi, chaque doigt 17 vient dans la position d'arrêt ou s'escamote quand la tige 30 est déplacée parallèlement à elle-même, respectivement dans un sens ou dans l'autre.

Chaque chape 7 comporte, ici au bout de chaque aile 11, un talon 32 derrière lequel prend appui la tige 30, de sorte que l'ensemble tige 30-doigts 17 se maintient aux chapes 7 avec chaque doigt 17 engagé dans un trou 16, et la tige en appui sur les talons 32, tant en position d'arrêt (voir figures 6 et 7) qu'en position escamotée (voir figures 8 et 9).

La tige 30 est munie pour sa manipulation d'une poignée 33, située à une extrémité sur le mode de réalisation montré sur les figures 2 et 3, et dans une position intermédiaire dans le mode de réalisation illustré sur la figure 4.

On notera que sur la figure 2, où les doigts 17 sont en position d'arrêt, on a également représenté la position de la poignée 33 lorsque la tige 30 a été déplacée parallèlement à elle-même pour que les doigts 17 soient en position escamotée.

Le dispositif d'articulation de la ridelle 3 comporte également des moyens (non représentés) pour maintenir en position la tige, et notamment une première et une deuxième griffes élastiques solidarisées à la benne 2, dans chacune desquelles est adaptée à s'engager la poignée 33 du mode de réalisation de la figure 4, les doigts 17 étant en position d'arrêt quand la poignée 33 est engagée dans la première griffe, et en position escamotée quand la poignée 33 est engagée dans la deuxième griffe.

On observera que si l'utilisateur n'a pas l'occasion d'utiliser les ridelles dans une position de bout de course partiellement ouverte, alors il est possible de ne pas installer dans les charnières 4 la tige 30 munie des doigts 17.

De nombreuses variantes sont possibles en fonction des circonstances, la position de bout de course partiellement ouverte peut par exemple être choisie avec la ridelle 3 dans une autre position qu'à l'horizontale ; dans la position de bout de course pleinement ouverte, la ridelle 3 peut ne pas être verticale, notamment si elle rencontre auparavant les roues du camion. Les charnières 4 peuvent également être remplacées par des charnières de type différent, avec l'élément solidarisé à la paroi latérale inférieure de la benne qui n'est pas une chape, et l'élément solidarisé à la ridelle qui n'est pas un tenon, et des moyens correspondants pour maintenir de façon amovible le doigt et pour venir en butée sur celui-ci.

Plus généralement, on rappelle que l'invention n'est pas limitée aux exemples décrits et représentés.

## Revendications

1. Dispositif d'articulation par le bas d'une ridelle (3) de benne (2) de véhicule (1), comportant : plusieurs charnières (4) dont au moins une est formée par un premier élément (7) solidarisé à une paroi latérale inférieure (8) de la benne, par un deuxième élément (9) solidarisé à la ridelle (3), et par un axe d'articulation (10) entre le premier et le deuxième éléments ; et des moyens (16) pour maintenir de façon amovible à proximité dudit axe d'articulation (10) un moyen d'arrêt (17) dans une position d'arrêt ; ledit deuxième élément (9) comportant un moyen de butée (22), qui quand le moyen d'arrêt (17) est maintenu dans ladite position d'arrêt, interdit à la ridelle (3) lorsqu'elle s'ouvre d'aller au-delà d'une position partiellement ouverte prédéterminée où le moyen de butée (22) prend appui sur le moyen d'arrêt (17), et qui quand le moyen d'arrêt (17) est escamoté, n'interfère pas sur l'ouverture de la ridelle ; caractérisé en ce que le moyen d'arrêt (17) est un doigt (17) ayant une première zone allongée de contact (18) par laquelle, dans ladite position d'arrêt, il porte contre une paroi (12) solidaire de la benne, ledit moyen de butée (22) prenant appui sur ledit doigt (17) dans ladite position partiellement ouverte prédéterminée, par une deuxième zone allongée de contact (19) du doigt (17), de sorte que le doigt maintient la ridelle (3) dans ladite position partiellement ouverte prédéterminée en étant comprimée entre lesdites première et deuxième zones allongées de contact (18, 19).

2. Dispositif selon la revendication 1, caractérisé en ce que ledit doigt (17) est cylindrique avec lesdites première et deuxième zones allongées de contact (18, 19) faisant partie de sa paroi latérale, ladite paroi (12) solidaire de la benne présentant une rainure (20) de courbure correspondante sur laquelle porte ladite première zone allongée de contact (18) dans ladite position d'arrêt, ledit moyen de butée (22) présentant une surface (21) ayant une courbure correspondante par laquelle il prend appui sur ladite deuxième zone allongée de contact (19) dans ladite position partiellement ouverte prédéterminée.

3. Dispositif selon l'une quelconque des revendications 1 ou 2, caractérisé en ce que ledit premier élément est une chape (7) et ledit deuxième élément un tenon (9) qui vient entre deux ailes (11) de la chape qui sont mutuellement parallèles et font saillie à partir d'une paroi de fond (12) de la chape, ledit axe d'articulation (10) étant orienté parallèlement à la paroi de fond (12) et transversalement aux dites ailes (11) qui le porte, ladite paroi solidaire de la benne sur laquelle porte la première zone allongée de contact (18) du doigt (17) étant ladite paroi de fond (12), lesdits moyens que comporte la chape pour maintenir de façon amovible le doigt, comportant un trou transversal (16) dans au moins une dite aile (11), trou (16) à travers lequel le doigt (17) est adapté à coulisser parallèlement à lui-même pour venir dans ladite position d'arrêt, et pour être escamoté.

4. Dispositif selon la revendication 3, caractérisé en ce que ledit moyen de butée du tenon (9) est un mentonnet (22).

5. Dispositif selon l'une quelconque des revendications 1 à 4, caractérisé en ce que la ridelle (3) est à l'horizontale dans ladite position partiellement ouverte prédéterminée.

6. Dispositif selon l'une quelconque des revendications 3 à 5, caractérisé en ce qu'il comporte au moins deux charnières (4) similaires comportant une dite chape (7) et un dit tenon (9), et en outre une tige (30) munie pour chaque charnière d'un dit doigt (17), chaque doigt venant dans ladite position d'arrêt ou s'escamotant quand la tige (30) est déplacée parallèlement à elle-même respectivement dans un sens ou dans l'autre.

7. Dispositif selon la revendication 6, caractérisé ce que chaque dite chape (7) comporte au moins un talon (32) derrière lequel prend appui ladite tige (30), de sorte que l'ensemble tige-doigts se maintient aux chapes (7) avec chaque doigt (17) engagé dans un dit trou (16) d'une aile (11) et ladite tige (30) en appui sur lesdits talon (32), tant en position d'arrêt qu'en position escamotée.

8. Dispositif selon l'une quelconque des revendications 6 ou 7, caractérisé en ce que ladite tige est munie d'une poignée (33) pour sa manipulation.

9. Dispositif selon l'une quelconque des revendications 6 à 8, caractérisé en ce qu'il comporte des moyens pour maintenir en position ladite tige (30).

10. Dispositif selon l'une quelconque des revendications 6 à 9, caractérisé en ce que lesdits moyens pour maintenir en position la tige (30) comportent une première et une deuxième griffes élastiques dans chacune desquelles est adaptée à s'engager une poignée (33) dont est munie la tige (30), chaque doigt (17) étant en position d'arrêt quand la poignée (33) est engagée dans la première griffe, et en position escamotée quand la poignée est engagée dans la deuxième griffe.

## Claims

1. Device for pivoting the tailboard (3) of the body (2) of a lorry (1) at its bottom, including: several hinges (4), at least one of which is formed by a first element (7) fixed to a lower lateral wall (8) of the body, by a second element (9) fixed to the tailboard (3), and by a pivot axis (10) between the first and second elements; and means (16) for removably holding, in the vicinity of the said pivot axis (10), a stop means (17) in a stop position; the said second element (9) having an abutment means (22) which, when the stop means (17) is held in the said stop position, prevents the tailboard (3), when it opens, from moving beyond a predetermined partially open position where the abutment means (22) bears on the stop means (17), and which, when the stop means (17) is retracted, does not interfere with the opening of the tailboard; characterised in that the stop means (17) is a finger (17) having a first elongate contact area (18) through which, in the said stop position, it bears against a wall (12) fixed to the body, the said abutment means (22) bearing on the said finger (17) in the said predetermined partially open position, through a second elongate contact area (19) of the finger (17), so that the finger holds the tailboard (3) in the said predetermined partially open position, while being compressed between the said first and second elongate contact areas (18, 19).

2. Device according to Claim 1, characterised in that the said finger (17) is cylindrical, with the said first and second elongate contact areas (18, 19) forming part of its lateral wall, the said wall (12) fixed to the body having a groove (20) of corresponding curvature on which the said first elongate contact area (18) bears in the said stop position, the said abutment means (22) having a surface (21) with a corresponding curvature through which it bears on the said second elongate contact area (19) in the said predetermined partially open position.

3. Device according to either one of Claims 1 or 2, characterised in that the said first element is a clevis (7) and the said second element a tenon (9) which comes between two wings (11) of the clevis which are parallel to each other and project from a bottom wall (12) of the clevis, the said pivot axis (10) being oriented parallel to the bottom wall (12) and transversely to the said wings (11) which carry it, the said wall fixed to the body on which the first elongate contact area (18) of the finger (17) bears being the said bottom wall (12), the said means which the clevis has for removably holding the finger including a transverse hole (16) in at least one wing (11), a hole (16) through which the finger (17) is adapted to slide parallel to itself in order to come into the said stop position and be retracted.

4. Device according to Claim 3, characterised in that the said stop means of the tenon (9) is a toe (22).

5. Device according to any one of Claims 1 to 4, characterised in that the tailboard (3) is horizontal in the said predetermined partially open position.

6. Device according to any one of Claims 3 to 5, characterised in that it includes at least two similar hinges (4) having a said clevis (7) and a said tenon (9), and also a rod (30) provided, for each hinge, with a said finger (17), each finger coming into the said stop position or retracting when the rod (30) is moved parallel to itself respectively in one direction or the other.

7. Device according to Claim 6, characterised in that each said clevis (7) has at least one heel (32) behind which the said rod (30) bears, so that the rod/finger assembly is held against the clevises (7) with each finger (17) engaged in a said hole (16) in a wing (11) and the said rod (30) bearing against the said heels (32), both in the stop position and in the retracted position.

8. Device according to either one of Claims 6 or 7, characterised in that the said rod is provided with a handle (33) for its manipulation.

9. Device according to any one of Claims 6 to 8, characterised in that it includes means for holding the said rod (30) in position.

10. Device according to any one of Claims 6 to 9, characterised in that the said means for holding the rod (30) in position include first and second elastic claws in each of which a handle (33), with which the rod (30) is provided, is adapted to engage, each finger (17) being in the stop position when the handle (33) is engaged in the first claw, and in the retracted position when the handle is engaged in the second claw.

## Patentansprüche

1. Vorrichtung zur unteren gelenkigen Lagerung der Bordwand (3) der Ladepritsche (2) eines Fahrzeugs (1) mit mehreren Scharnieren (4), von denen wenigstens eines durch ein erstes, an einer unteren Seitenwand (8) der Ladepritsche befestigtes Element (7), ein zweites, an der Bordwand (3) befestigtes Element (9) und eine zwischen dem ersten und dem zweiten Element angeordnete Gelenkachse (10) gebildet ist, Mitteln (16) zum lösbaren Halten eines Anschlags (17) in der Nähe der Gelenkachse (10) in einer Anschlagstellung, einem zu dem zweiten Element (9) gehörenden Gegenanschlag (22), der bei in der Anschlagstellung befindlichem Anschlag (17) verhindert, daß die Bordwand (3) beim Öffnen eine vorbestimmte, teilweise geöffnete Stellung überschreitet, in der sich der Gegenanschlag (22) am Anschlag (17) abstützt, und der bei entferntem Anschlag (17) das Öffnen der Bordwand nicht blockiert, **dadurch gekennzeichnet,** daß der Anschlag (17) ein Finger (17) ist, der einen ersten, sich in Längsrichtung erstreckenden Anlagebereich (18) hat, mit dem er in der Anschlagstellung an einer an der Ladepritsche befestigten Wand (12) anliegt, und sich der Gegenanschlag (22) in der vorbestimmten, teilweise geöffneten Stellung an einem zweiten, sich in Längsrichtung erstreckenden Anlagebereich (19) des Fingers (17) abstützt, so daß der Finger die Bordwand (3) in der vorbestimmten, teilweise geöffneten Stellung hält, während er zwischen dem ersten und dem zweiten Anlagebereich (18, 19) unter Druckspannung steht.

2. Vorrichtung nach Anspruch 1, **dadurch gekennzeichnet,** daß der Finger (17) zylindrisch ist und der erste und zweite sich in Längsrichtung erstreckende Anlagebereich (18, 19) Teil der Umfangswand sind, die an der Ladepritsche befestigte Wand (12) eine entsprechend eingewölbte Nut (20) aufweist, an der der erste sich in Längsrichtung erstreckende Anlagebereich (18) in der Anschlagstellung anliegt, und der Gegenanschlag (22) eine entsprechend eingewölbte Fläche (21) hat, die sich in der vorbestimmten, teilweise geöffneten Stellung an dem zweiten sich in Längsrichtung erstreckenden Anlagebereich (19) abstützt.

3. Vorrichtung nach Anspruch 1 oder 2, **dadurch gekennzeichnet,** daß das erste Element ein Bügel (7) ist und das zweite Element ein Zapfen (9), der zwischen zwei Schenkel (11) des Bügels eingreift, die zueinander parallel sind und von einer Unterwand (12) des Bügels vorspringen, die Gelenkachse (10) parallel zur Unterwand (12) und quer zu den sie tragenden Schenkeln (11) angeordnet ist, die an der Ladepritsche befestigte Wand, an welcher sich der erste, sich in Längsrichtung erstreckende Anlagebereich (18) des Fingers (17) abstützt, die genannte Unterwand (12) ist, die zum Bügel gehörenden Mittel zum lösbaren Halten des Fingers ein Querloch (16) in wenigstens einem der Schenkel (11) aufweisen und der Finger (17) parallel zu sich selbst durch das Loch (16) verschieblich ist, um in die Anschlagstellung zu kommen und um entfernt zu werden.

4. Vorrichtung nach Anspruch 3, **dadurch gekennzeichnet,** daß der Gegenanschlag des Zapfens (9) die Form eines Kinnstückchens (22) hat.

5. Vorrichtung nach einem der Ansprüche 1 bis 4, **dadurch gekennzeichnet,** daß sich in der vorbestimmten, teilweise geöffneten Stellung die Bordwand (3) horizontal erstreckt.

6. Vorrichtung nach einem der Ansprüche 3 bis 5, **dadurch gekennzeichnet,** daß sie wenigstens zwei gleiche Scharniere (4) mit dem genannten Bügel (7) und den genannten Zapfen (9) aufweist und darüber hinaus eine Stange (30), die für jedes Scharnier mit einem Finger (17) versehen ist, der jeweils in die genannte Anschlagstellung kommt oder sich entfernt, wenn die Stange (30) in der einen oder anderen Richtung parallel zu sich selbst verschoben wird.

7. Vorrichtung nach Anspruch 6, **dadurch gekennzeichnet,** daß der Bügel (7) wenigstens einen hackenförmigen Ansatz (32) hat, hinter welchem sich die Stange (30) abstützt, so daß sich die Einheit aus Stange und Fingern an den Bügeln (7) hält, wobei sowohl in der Anschlagstellung als auch in der zurückgezogenen Stellung jeder Finger (17) in ein Loch (16) eines Schenkels (11) eingreift und die Stange (30) sich auf dem hackenförmigen Ansatz (32) abstützt.

8. Vorrichtung nach einem der Ansprüche 6 oder 7, **dadurch gekennzeichnet,** daß die Stange mit einem Handgriff (33) für ihre Betätigung versehen ist.

9. Vorrichtung nach einem der Ansprüche 6 bis 8, **dadurch gekennzeichnet,** daß sie Mittel zum Halten der Stange (30) in bestimmten Stellungen aufweist.

10. Vorrichtung nach einem der Ansprüche 6 bis 9, **dadurch gekennzeichnet,** daß die Mittel zum Halten der Stange (30) in bestimmten Stellungen eine erste und eine zweite elastische Klaue aufweisen, deren jede mit einem an der Stange (30) angebrachten Handgriff (33) in Eingriff zu bringen ist, wobei sich jeder Finger (17) in der Anschlagstellung befindet, wenn der Handgriff (33) in Eingriff mit der ersten Klaue ist, und die zurückgezogene Stellung einnimmt, wenn der Handgriff in Eingriff mit der zweiten Klaue ist.
